# EUROPÄISCHE PATENTSCHRIFT

(11) **EP 0 689 760 B1**
(45) Veröffentlichungstag und Bekanntmachung des Hinweises auf die Patenterteilung: **21.04.1999**
(21) Anmeldenummer: 95107066.3
(22) Anmeldetag: 10.05.1995
(51) Int. Cl.: A01D 90/04

(54) **Schneidwerk für landwirtschaftliche Erntefahrzeuge**
Cutter for agricultural harvesters
Dispositif de coupe pour véhicules de récolte

(30) Priorität: 30.06.1994 DE 4422872
(43) Veröffentlichungstag der Anmeldung: 03.01.1996
(73) Patentinhaber: CLAAS KGaA, 33428 Harsewinkel (DE)
(72) Erfinder: Tertilt, Werner, D-33428 Harsewinkel (DE); Scholz, Egbert, D-33378 Rheda-Wiedenbrück (DE); Esken, Dirk, D-59494 Soest (DE)

(56) Entgegenhaltungen:
- DE-A- 4 301 636

## Beschreibung

Die Erfindung bezieht sich auf ein Schneidwerk für landwirtschaftliche Erntefahrzeuge, insbesondere für Rundballen- und Quaderballenpressen, mit einem Förderkanal, dem von einem Aufnahmeorgan, vorzugsweise einer Pickup, Halmgut zugeführt wird, und mit einer Mehrzahl von in einer Reihe angeordneten, höhenverschwenkbaren und in der Schneidstellung durch Schlitze in den Förderkanal hineinragenden und darin mit Förderzinken eines Rotors zur Halmgutzerkleinerung zusammenwirkenden Schneidmessern, welche jeweils durch gegenüber den Schneidmessern bewegbare, für diese Bewegung steuerbare Stellorgane in der Schneidstellung gehalten sind und sämtlich oder in wahlweiser Anzahl für das Verschwenken in eine Nichtschneidstellung von den Stellorganen freigegeben werden, sowie die Stellorgane mit einer elastischen Überlastsicherung zum kurzseitigen Verschwenken in die Nichtschneidstellung bei Fremdkörpereinwirkung ausgestattet sind.

Bei den bekannten Schneidwerken der landwirtschaftlichen Erntefahrzeuge sind die das Durchtreten der Schneidmesser in die Schneidstellung zulassenden Schlitze im Förderkanal in ihrem Schlitzrestbereich, der sich vom Messerrücken bis zum Schlitzende erstreckt, offen, so daß das zerkleinerte Schneidgut teilweise durch diese Schlitze als Schneidgutverlust fallen kann oder sich in den Schlitzen festsetzt, was zu Verstopfungen im Förderkanal und zu Beeinträchtigungen der Arbeitsweise führen kann.

Aufgabe der Erfindung ist es, bei dem nach der eingangs genannten Art aufgebauten Schneidwerk die Schlitze im Förderkanal in einfacher, automatischer und gegen Schneidgutverlust sowie Schneidgutverstopfung gesicherter Weise im Schneidbetrieb verschließbar auszugestalten.

Diese Aufgabe wird dadurch gelöst, daß die Schlitze des Förderkanales in der Schneidstellung der Schneidmesser in ihrem Längenbereich (Restschlitz) zwischen Schneidmesserrücken und Schlitzende durch eine flexible und/oder elastische Abdeckung geschlossen sind, welche durch die Stellorgane in die Schlitz-Schließstellung und durch die Schneidmesser in die Schlitz-Freigabestellung bewegbar ist.

In den Unteransprüchen sind Gestaltungsmerkmale enthalten, die vorteilhafte und förderliche Weiterbildungen der Aufgabenlösung darstellen.

Bei dem Schneidwerk gemäß der Erfindung ist der Förderkanal im Bereich seiner Schlitze in einfacher, automatischer und gegen Schneidgutverlust sowie Schneidgutverstopfung gesicherter Weise im Schneidbetrieb geschlossen ausgeführt.

Dieses Verschließen der Schlitze in ihrem Restschlitzbereich zwischen Messerrücken und Schlitzende wird durch eine flexible und/oder elastische Abdeckung durchgeführt, welche unter der die Schlitze zeigenden Förderkanalwandung mit einem Querrand festgelegt ist und durch die Schneidmesser in die Schneidstellung bringenden und haltenden Stellorgane in die Schließstellung hochgeschwenkt wird.

Durch diese Abdeckung ist der Kanal hinter den Schneidmessern als durchgehend geschlossener Kanal ausgestaltet, und somit kann das Schneidgut ohne Störungen, Durchfallen oder Verstopfen im Förderkanal weitergeführt werden.

Die Abdeckung ist in bevorzugter Weise als Leiste ausgebildet und durch schmale Schlitze für jeden Schlitz im Förderkanal kammartig in Streifen aufgeteilt, die dann durch jeweils ein Stellorgan für das jeweilige Schneidmesser bewegt werden.

Beim Freigeben der Schneidmesser oder bei Zurückschwenken der Schneidmesser durch Fremdkörpereinwirkung wird der jeweilige Streifen durch den Schneidmesserrücken ebenfalls nach unten weggeschwenkt, so daß das Schneidmesser durch den geöffneten Schlitz nach unten in die Nichtschneidstellung gelangen kann.

Durch die kammartige Ausbildung der leistenförmigen Abdeckung können einzelne Messer ausgeschaltet werden. Sofern einzelne Schneidmesser aus dem Schneidwerk ausgebaut werden sollen, läßt sich ein Blindmesser einsetzen, was ebenfalls durch das Stellorgan fixiert wird und dann den gesamten Schlitz im Förderkanal verschließt.

Diese verschließbare Ausbildung der Schlitze im Förderkanal ist insbesondere für Rundballen- und Quaderballenpressen vorgesehen, kann jedoch auch bei Ladewagen eingesetzt werden.

Anhand der Zeichnungen wird nachfolgend ein Ausführungsbeispiel der Erfindung näher erläutert. Es zeigt:
- Fig. 1 und Fig. 2: eine schematische Seitenansicht einer fahrbaren Rundballen- und einer fahrbaren Vierkantballenpresse mit Schneidwerk,
- Fig. 3: eine Seitenansicht im teilweisen Schnitt des Schneidwerkes mit Schlitzabdeckung des Förderkanales für die Schneidmesser,
- Fig. 4: eine Perspektive der Schlitzabdeckung,
- Fig. 5: eine Seitenansicht im teilweisen Schnitt des Schneidwerkes mit Schlitzabdeckung und eingesetztem Blindmesser.

Das Schneidwerk für/an landwirtschaftliche Erntefahrzeuge (n), insbesondere Rundballenpressen (1) und Quaderballenpressen (2) oder aber auch Ladewagen, weist einen Förderkanal (3) auf, dem von einem Aufnahmeorgan (4), vorzugsweise einer Pickup, Halmgut, zugeführt wird. In diesen Förderkanal (3) ragen in der Schneidstellung von unten her höhenverschwenkbare und in Reihe angeordnete Schneidmesser (5) und von oben mit diesen Schneidmessern (5) zusammenwirkende, das Halmgut durch die Schneidmesser (5) zur Zerkleinerung fördernde Zinken eines Rotors (6) hinein. Die Schneidmesser (5) fassen dabei durch Schlitze (7) in der unteren Förderkanalwand (8).

Die Schneidmesser (5) werden jeweils durch gegenüber den Schneidmessern (5) bewegbare, für diese Bewegung steuerbare Stellorgane (9) in der Schneidstellung gehalten und werden sämtlich oder in wahlweiser Anzahl für das Verschwenken in eine Nichtschneidstellung von den Stellorganen (9) freigegeben; weiterhin stehen die Schneidmesser (5) unter Einwirkung einer elastischen Überlastsicherung (10) der Stellorgane (9) zum kurzfristigen Verschwenken in die Nichtschneidstellung bei Fremdkörpereinwirkung.

Die Schlitze (7) des Förderkanals (3) sind in der Schneidstellung der Schneidmesser (5) in ihrem Längenbereich (Restschlitz) zwischen Schneidmesserrücken (5a) und Schlitzende (7a) durch eine flexible und/oder elastische Abdeckung (11) geschlossen, welche durch die Stellorgane (9) in die Schlitz-Schließstellung und durch die Schneidmesser (5) in die Schlitz-Freigabestellung bewegbar ist.

Die Abdeckung (11) ist von einer quer über die gesamte Breite des Förderkanales (3) verlaufenden, mit einem Querrand (12) versehenen, im Bereich der Schlitzenden (7a) unter dem Förderkanal (3) und der Förderkanalwand (8) befestigten Abdeckleiste gebildet, welche durch die ihren anderen Querrand (13) beaufschlagenden Winkellachsen (17), die von den Stellorgane (9) beaufschlagt werden, unter den Förderkanal (3) in die unter der Kanalwand (8) liegenden Schließstellung höhenverschwenkbar ist.

Die Abdeckung (11) ist in gegenüber dem befestigten Querrand (12) freibewegliche Streifen (11a) für jeweils einen Schlitz (7) unterteilt, wodurch die Schlitze (7) einzeln oder gemeinsam abgedeckt werden können.

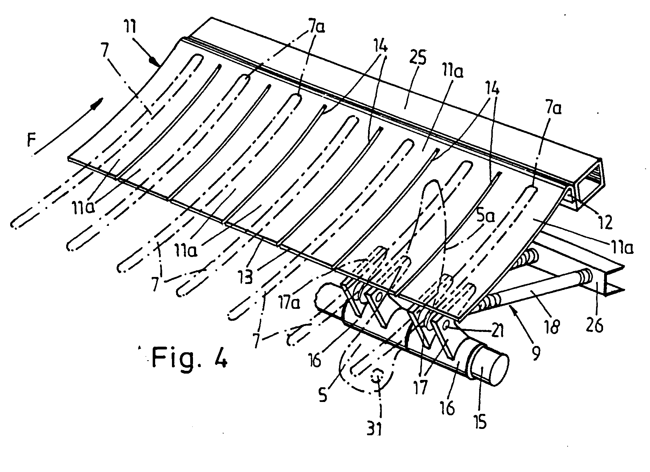

Die Abdeckung (11) ist durch vom freien, messerseitigen Querrand (13) aus in Förderrichtung (F) bis nahe dem befestigten Querrand (12) zwischen den Schneidmessern (5) verlaufende schmale Schlitze (14) kammartig in die Streifen (11a) unterteilt und jeder Streifen (11a) überdeckt einen Schlitz (7) zu beiden Schlitz-Breitenseiten, wie in Fig. 4 gezeigt.

Jedem Streifen (11a) der Abdeckung (11) sind zwei beiderseits des zugehörenden Schneidmessers (5) angeordnete, an einer um eine horizontale Achse (15) drehbare Hülse (16) festgelegte Winkellaschen (17) zugeordnet, zwischen denen eine Schiebestange (18) des Stellorganes (9) mit einer endseitigen Gabel (20) in einer Gelenkachse (21) eingreift, welche die Verschwenkung des Winkellaschenpaares (17) bewirkt und mit einem um die Gelenkachse (21) angeordneten Druckpunkt (22) in Form einer Profilrolle (Nutrolle) in eine Fixiermulde (23) des Schneidmessers (5) in der Schneidstellung eingreift.

Jedes Winkellaschenpaar (17) bildet mit seinen beiden in Förderrichtung (F) abgewinkelten Laschenschenkeln (17a) Stütznasen für das freie Ende (13) des Streifens (11a) in der Schlitz-Schließstellung.

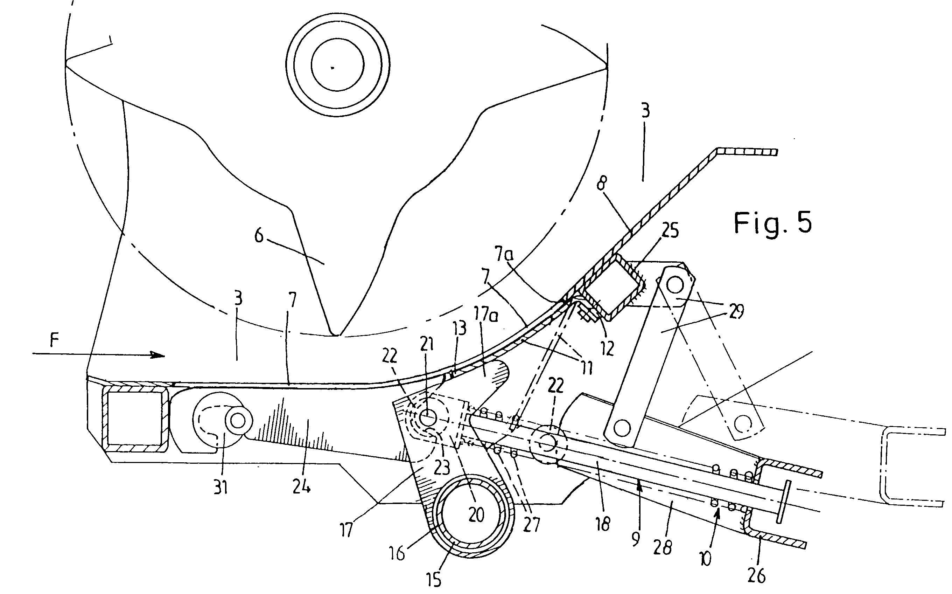

Bei ausgebautem Schneidmesser (5) wird in den Schlitz (7) des Förderkanales (3) ein Blindmesser (24) gemäß Fig. 5 eingesetzt, welches mit der Abdeckung (11) den Schlitz (7) auf der gesamten Schlitzlänge schließt und durch das Stellorgan (9) entsprechend dem Schneidmesser (5) lagefixiert ist.

Die bewegliche Abdeckung (11) ist in bevorzugter Weise mit ihrem nach unten abgebogenen Querrand (12) an einem unter der Förderkanalwand (8) hinter dem Schlitzende (7a) festgelegten Querteil -Trägerholm- (25) befestigt, an dem auch Teile des Stellorganes (9) und der Überlastsicherung (10) angreifen.

Alle Schiebestangen (18) sind mit und gegenüber einer Querverbindung (26) unter Zwischenschaltung jeweils eines Federelementes (27) verschiebbar verbunden und diese Querverbindung (26) ist durch mindestens einen nicht dargestellten Druckmittelzylinder gegenüber den Schneidmessern (5) verschiebbar.

Jede Schiebestange (18) bildet mit ihrem Federelement (27) gleichzeitig eine gegenüber der Querverbindung (26) bewegbare Überlastsicherung (10).

Die Querverbindung (26) ist über Laschen (28) und Gelenkhebel (29) an dem Querteil (25) beweglich aufgehängt.

Um jede Schiebestange (18) ist eine sich einenends an der Querverbindung (26) und anderenends an der schiebestangenseitigen Gabel (20) abstützende Druckfeder (27) angeordnet, durch die die Schiebestange (18) bei Verschiebung der Querverbindung (26) in Richtung Schneidmesser (5) mitgenommen und bei Überbelastung des Schneidmessers (5) durch dasselbe in Richtung Querverbindung als Überlastsicherung zurückgedrückt wird.

Jede Schiebestange (18) besitzt an ihrem in die und durch die Querverbindung (26) eingreifenden Längenende einen mit der von den Schneidmessern (5) zurückfahrenden Querverbindung (26) zusammenwirkenden, die Schiebestange (18) entgegen der Kraft der Druckfeder (27) in die das Schneidmesser (5) freigebende Stellung mitnehmenden Anschlag (30).

Alle in Reihe angeordneten Schneidmesser (5) sind um eine verdrehbare Exzenterwelle (31) in der höhenverschwenkbaren Lagerstellung verriegelt gehalten und durch Exzenterwellenverdrehung zum Ausbau entriegelbar.

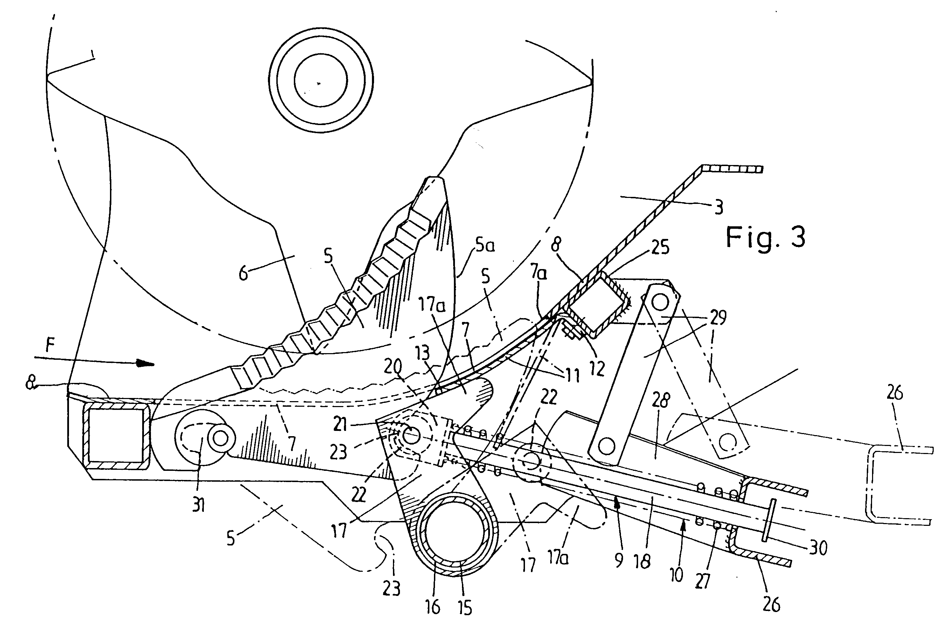

In Fig. 3 ist das Schneidmesser (5) in die Schneidstellung durch den Förderkanalschlitz (7) hochgeschwenkt und in dieser Stellung durch das Stellorgan (9) fixiert; gleichzeitig hat das zugehörige Winkellaschenpaar (17) den dem Schneidmesser (5) zugeordneten Abdeckstreifen (11) nach oben unter die Förderkanalwand (8) hochgedrückt, so daß der Schlitzbereich zwischen Messerrücken (5a) und Schlitzende (7a) geschlossen ist.

Beim Freigeben des Schneidmessers (5) durch das zurückfahrende Stellorgan (9) oder bei Fremdkörpereinwirkung durch die Überlastsicherung (10) schwenkt das Schneidmesser (5) nach unten und drückt den Abdeckstreifen (11) ebenfalls nach unten vom Förderkanal (3) weg oder der Abdeckstreifen (11) schwenkt durch Eigenelastizität selbsttätig nach unten weg, wie in Fig. 3 in strichpunktierter Linie dargestellt.

In dieser Lage wird der Schlitz (7) durch das Schneidmesser (5) auf seiner gesamten Längen geschlossen.

Fig. 5 zeigt das eingesetzte Blindmesser (24), welches zusammen mit dem hochgeschwenkten Abdeckstreifen (11) den Schlitz (7) schließt.

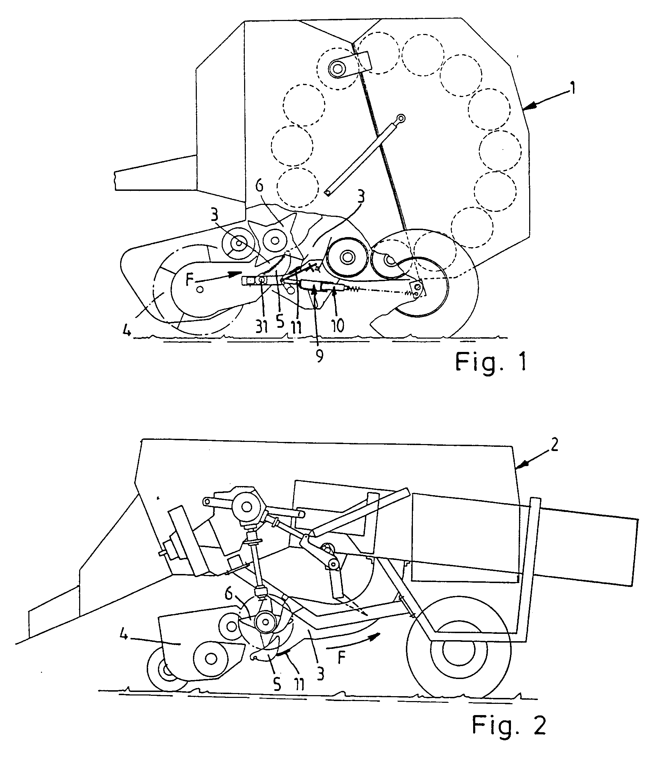

Fig. 1 zeigt eine Rundballenpresse (1) mit Schneidwerk, dessen Schneidmesser (5) der Abdeckung (11) zugeordnet ist.

Das gleiche gilt für die in Fig. 2 gezeigte Qaderballenpresse (2).

## Patentansprüche

1. Schneidwerk für landwirtschaftliche Erntefahrzeuge (1, 2), mit einem Förderkanal (3), dem von einem Aufnahmeorgan (4), Vorzugsweise einer Pickup, Halmgut zugeführt wird, und mit einer Mehrzahl von in einer Reihe angeordneten, höhenverschwenkbaren Schneidmessern (5), die in der Schneidstellung in den Förderkanal (3) hineinragen und die jeweils durch gegenüber den Schneidmessern (5) bewegbare, für diese Bewegung steuerbare Stellorgane (9) in der Schneidstellung gehalten sind und sämtlich oder in wahlweiser Anzahl für das Verschwenken in eine Nichtschneidstellung von den genannten Stellorganen freigegeben werden, und wobei die genannten Stellorgane (9) mit einer elastischen Überlastsicherung (10) zum kurzseitigen Verschwenken in die Nichtschneidstellung bei Fremdkörpereinwirkung ausgestattet sind,
dadurch gekennzeichnet, daß
die Schlitze (7) des Förderkanales (3) in der Schneidstellung der Schneidmesser (5) in dem durch die Schneidmesser (5) nicht geschlossenen Bereich zwischen Schneidmesserrücken (5a) und Schlitzende (7a) durch eine flexible und/oder elastische Abdeckung (11) geschlossen sind, welche durch die Stellorgane (9) in die Schlitz-Schließstellung und durch die Schneidmesser (5) in die Schlitz-Freigabestellung bewegbar ist.

2. Schneidwerk nach Anspruch 1, dadurch gekennzeichnet, daß die Abdeckung (11) von einer quer über die gesamte Breite des Förderkanales (3) verlaufenden, mit einem Querrand (12) versehenen, im Bereich der Schlitzenden (7a) unter dem Förderkanal (3) und der die Schlitze (7) aufweisenden unteren Förderkanalwand (8) und befestigten Abdeckleiste gebildet ist, welche durch die ihren anderen Querrand (13) beaufschlagenden Winkellaschen (17), die von den Stellorganen (9) beaufschlagt werden, unter den Förderkanal (3) in die Schlitz-Schließstellung höhenverschwenkbar und gehalten ist.

3. Schneidwerk nach Anspruch 1 oder 2, dadurch gekennzeichnet, daß die Abdeckung (11) in gegenüber dem befestigten Querrand (12) freibewegliche Streifen (11a) für jeweils einen Schlitz (7) unterteilt ist.

4. Schneidwerk nach einem der Ansprüche 1 bis 3, dadurch gekennzeichnet, daß die Abdeckung (11) durch vom freien, messerseitigen Querrand (13) her in Förderrichtung (F) bis nahe dem befestigten Querrand (12) zwischen den Schneidmessern (5) verlaufende schmale Schlitze (14) kammartig in die Streifen (11a) unterteilt ist und jeder Streifen (11a) einen Schlitz (7) zu beiden Schlitz-Breitenseiten überdeckt.

5. Schneidwerk nach einem der Ansprüche 1 bis 4, dadurch gekennzeichnet, daß jedem Streifen (11a) der Abdeckung (11) zwei beiderseits des Schneidmessers (5) angeordnete, an einer um eine horizontale Achse (15) drehbaren Hülse (16) festgelegte Winkellaschen (17) zugeordnet sind, zwischen denen eine Schiebestange (18) des Stellorganes (9) mit einer endseitigen Gabel (20) in einer Gelenkachse (21) angreift, welche die Verschwenkung des Winkellaschenpaares (17) bewirkt und mit einem um die Gelenkachse (21) angeordneten Druckpunkt (22) in Form einer Profilrolle in einer Fixiermulde (23) des Schneidmessers (5) in der Schneidstellung eingreift.

6. Schneidwerk nach einem der Ansprüche 1 bis 5, dadurch gekennzeichnet, daß jedes Winkellaschenpaar (17) mit seinen beiden in Förderrichtung (F) abgewinkelten Laschenschenkeln (17a) Stütznasen für das freie Ende (13) des Streifens (11a) in der Schlitz-Schließstellung bildet.

7. Schneidwerk nach einem der Ansprüche 1 bis 6, dadurch gekennzeichnet, daß in den Schlitz (7) des Förderkanales (3) bei ausgebautem Schneidmesser (5) ein Blindmesser (24) eingesetzt ist, welches mit der Abdeckung (11) den Schlitz (7) auf der gesamten Schlitzlänge schließt und durch das Stellorgan (9) lagefixiert ist.

## Claims

1. A cutter mechanism for agricultural harvesting vehicles (1, 2) having a conveyor passage (3) to which crop material is fed by a receiving member (4), preferably a pick-up, and a plurality of cutter blades (5) which are arranged in a row and which are pivotable in respect of height and which in the cutting position project into the conveyor passage (3) and which are respectively held in the cutting position by control members (9) which are movable with respect to the cutter blades (5) and which are controllable for said movement, all or a selective number of the cutter blades being released for the pivotal movement into the non-cutting position by said control members, and wherein said control members (9) are provided with a resilient overload protection means (10) for temporary pivotal movement into the non-cutting position under the effect of foreign bodies, characterised in that in the cutting position of the cutter blades (5) the slots (7) of the conveyor passage (3) are closed in the region that is not closed by the cutter blades (5) between the cutter blade back (5a) and the slot end (7a) by a flexible and/or resilient cover means (11) which is movable by the control members (9) into the slot-closing position and by the cutter blades (5) into the slot-opening position.

2. A cutter mechanism according to claim 1 characterised in that the cover means (11) is formed by a cover strip which extends transversely over the entire width of the conveyor passage (3) and which is provided with a transverse edge (12) and which is fixed in the region of the slot ends (7a) under the conveyor passage (3) and the lower conveyor passage wall (8) having the slots (7) and which is pivotable in respect of height beneath the conveyor passage (3) into the slot-closing position and held in that position by the angle plates (17) which act on the other transverse edge (13) of the cover strip and which are actuated by the control members (9).

3. A cutter mechanism according to claim 1 or claim 2 characterised in that the cover means (11) is subdivided into strip portions (11a) for a respective slot (7), the strip portions being freely movable with respect to the fixed transverse edge (12).

4. A cutter mechanism according to one of claims 1 to 3 characterised in that the cover means (11) is subdivided into the strip portions (11a) in a comb-like configuration by narrow slots (14) which extend from the free transverse edge (13), at the blade side, in the conveyor direction (F) to close to the fixed transverse edge (12) and between the cutter blades (5), and each strip portion (11a) covers over a slot (7) at both wide sides thereof.

5. A cutter mechanism according to one of claims 1 to 4 characterised in that associated with each strip portion (11a) of the cover means (11) are two angle plates (17) which are arranged on both sides of the cutter blade (5) and which are fixed to a sleeve member (16) rotatable about a horizontal axis (15), between which angle plates a thrust rod (18) of the control member (9) engages with an end fork (20) in a pivot axis (21) which causes the pivotal movement of the pair of angle plates (17) and engages with a pressure point (22) arranged around the pivot axis (21), in the form of a shaped roller, in a fixing hollow (23) in the cutter blade (5) in the cutting position.

6. A cutter mechanism according to one of claims 1 to 5 characterised in that each pair of angle plates (17) with its two plate limbs (17a) which are angled in the conveyor direction (F) forms support noses for the free end (13) of the strip portion (11a) in the slot-closing position.

7. A cutter mechanism according to one of claims 1 to 6 characterised in that fitted into the slot (7) of the conveyor passage (3) when the cutter blade (5) is removed is a dummy blade (24) which with the cover means (11) closes the slot (7) over the entire slot length and is fixed in position by the control member (9).

## Revendications

1. Dispositif de coupe pour véhicules de récolte agricole (1, 2), comprenant un canal de transport (3) qui reçoit du produit de récolte en tige d'un organe de ramassage (4), en particulier d'un pick-up, et plusieurs couteaux (5) pivotant verticalement qui sont disposés en ligne, font saillie dans le canal de transport (3) en position de coupe, sont maintenus dans la position de coupe par des organes de réglage (9) mobiles par rapport aux couteaux (5), commandables pour provoquer ce déplacement, et peuvent être déverrouillés, ensembles ou en un nombre quelconque, par lesdits organes de réglage à des fins de pivotement dans une position hors-coupe, les organes de réglage (9) étant munis d'une sécurité de surcharge (10) élastique permettant un pivotement de courte durée dans la position hors-coupe en cas de corps étrangers, caractérisé par le fait que les fentes (7) du canal de transport (3), dans la position de coupe des couteaux (5), dans la zone non fermée par les couteaux (5) entre dos de couteau (5a) et extrémité de fente (7a) sont fermées par un élément de fermeture (11) flexible et/ou élastique qui peut être amené par les organes de réglage (9) dans la position de fermeture des fentes et dans la position d'ouverture des fentes.

2. Dispositif de coupe selon la revendication 1, caractérisé par le fait que l'élément de fermeture (11) est formé d'une plaque de couverture qui s'étend transversalement sur toute la largeur du canal de transport (3), est pourvue d'un bord d'un transversal (12) et est fixée dans la région des extrémités de fentes (7a) sous le canal de transport (3) et la paroi de canal de transport (8) comportant les fentes (7), laquelle plaque peut pivoter verticalement et est tenue sous le canal de transport (3) par les pattes en équerre (17) agissant sur son autre bord transversal (13) et sollicitées par les organes de réglage (9).

3. Dispositif de coupe selon la revendication 1 ou 2, caractérisé par le fait que (11) est subdivisé en bandes (11a) qui sont peuvent se déplacer librement par rapport au bord transversal (12) fixe et sont associées chacune à une fente (7).

4. Dispositif de coupe selon une des revendications 1 à 3, caractérisé par le fait que l'élément de fermeture (11) est subdivisé en bandes (11a), à la manière d'un peigne, par des fentes (14) étroites qui s'étendent entre les couteaux (5), depuis le bord transversal (13) libre côté couteaux, dans la direction de transport (F) jusque dans le voisinage du bord transversal (12) fixe et que chaque bande (11a) couvre une fente (7) de chaque côté de la fente.

5. Dispositif de coupe selon une des revendications 1 à 4, caractérisé par le fait qu'à chaque bande (11a) de l'élément de fermeture (11) sont associées deux pattes en équerre (17) disposées de part et d'autre du couteau (5) et solidaires d'un manchon (16) tournant sur un axe (15) horizontal, entre lesquelles une tige coulissante (18) de l'organe de réglage (9) agit par une fourchette d'extrémité (20) sur un axe d'articulation (21), provoque le pivotement de la paire de pattes en équerre (17) et par un point d'appui (22) disposé autour de l'axe d'articulation (21) sous la forme d'un galet profilé pénètre dans une cavité de verrouillage (23) du couteau (5) dans la position de coupe.

6. Dispositif de coupe selon une des revendications 1 à 5, caractérisé par le fait que chaque paire de pattes en équerre (17) forme avec ses deux ailes (17a) coudées dans la direction de transport (F) des pattes supports pour l'extrémité libre (13) de la bande (11a), dans la position de fermeture de fente.

7. Dispositif de coupe selon une des revendications 1 à 6, caractérisé par le fait qu'un faux couteau (24) est monté dans la fente (7) du canal de transport (3) lorsque le couteau (5) est démonté, lequel faux couteau avec l'élément de fermeture (11) ferme la fente (7) sur toute sa longueur et est tenu en position pas l'organe de réglage (9).
